# EUROPEAN PATENT APPLICATION

(11) **EP 4 439 711 A1**
(43) Date of publication of application: **02.10.2024**
(21) Application number: 22898851.5
(22) Date of filing: 20.10.2022
(51) Int. Cl.: H01M 4/36, H01M 4/587, H01M 4/62, H01M 10/0569, H01M 10/0525, C01B 32/21

(54) **GRAPHITE-BASED ANODE MATERIAL AND PREPARATION METHOD THEREFOR**

(30) Priority: 24.11.2021 KR 20210163061
(71) Applicant: Posco Future M Co., Ltd, Pohang-si, Gyeongsangbuk-do 37918 (KR)
(72) Inventor: LEE, Ga Eul, Cheonan-si, Chungcheongnam-do 31110 (KR); JUNG, Ji Kwon, Cheonan-si, Chungcheongnam-do 31199 (KR); LEE, Heon Young, Cheonan-si, Chungcheongnam-do 31185 (KR); LEE, Kyoung Muk, Cheonan-si, Chungcheongnam-do 31207 (KR); KWON, Hae Jun, Cheonan-si, Chungcheongnam-do 31197 (KR); MIN, Jin Wook, Cheonan-si, Chungcheongnam-do 31118 (KR)
(74) Representative: Meissner Bolte Partnerschaft mbB
(86) International application number: PCT/KR2022/015995
(87) International publication number: WO 2023/096169

(57) **Abstract**

The present exemplary embodiments relate to a graphite-based negative electrode material, a method of manufacturing the same, a negative electrode including the same, and a lithium secondary battery including the same. The graphite-based negative electrode material according to an exemplary embodiment includes: a graphite oxide obtained by oxidizing a surface of first graphite, and a graphite coating including second graphite and low crystalline carbon positioned on a surface of the second graphite, wherein the graphite coating to the graphite oxide is 1/9 to 1/3.

## Description

### [Technical Field]

The present exemplary embodiments relate to a lithium secondary battery, and more particularly, to a graphite-based negative electrode material and a method of manufacturing the same.

### [Background Art]

Social interest in an environmental pollution problem due to depletion of fossil fuels and use of the fossil fuels is growing, and as a method for solving the problem, an environmentally-friendly energy source is receiving attention. Among the environmentally-friendly energy sources, interest in electrical energy is growing, and in particular, a lithium secondary battery is receiving attention.

The application range of the lithium secondary battery is expanding to electric vehicles and energy storage systems as well as small electronic device and portable IT devices. Since the application range of the lithium secondary battery has expanded, it becomes important to develop a novel material for high capacity and high output. Among the constituents of the lithium secondary battery, a negative electrode material serves to store lithium ions, which is an element related to the capacity and lifespan of the lithium secondary battery.

Various forms of carbon-based materials including artificial graphite, natural graphite, and hard carbon capable of insertion/desorption of lithium have been applied as the negative electrode material. Since graphite has a low discharge voltage of 0.2 V as compared with lithium, a battery using the graphite as a negative electrode active material shows a high discharge voltage of 3.6 V, thereby providing a merit in terms of energy density of the lithium secondary battery. In addition, since a long life span of the lithium secondary battery is secured by excellent reversibility, the lithium secondary battery is most widely used.

Since the natural graphite is inexpensive and shows similar electrochemical properties to artificial graphite, it has excellent utility as the negative electrode material. However, since the natural graphite has a plate shape, its surface area is large and its edge parts are exposed as they are, and when the natural graphite is applied as the negative electrode active material, an electrolyte penetration or decomposition reaction occurs. For this reason, the edge parts are delaminated or broken to cause a big irreversible reaction, and when the natural graphite is manufactured into an electrode plate, a graphitizing material is pressed and oriented to be flat on a current collector, so that impregnation of an electrolyte solution is not easy to deteriorate charge/discharge characteristics.

In order to solve the problem, efforts to transform the natural graphite to have a smooth surface shape through post-processing such as a spheronization process for reducing an irreversible reaction and improving electrode processability are being made.

Since the crystal structure of graphite which is commercialized as the negative electrode material is less changed during insertion and desorption of lithium ions, oxidation and reduction reactions occur continuously, so that excellent life characteristics and high theoretical capacity are shown. However, since the graphite may accept only one lithium ion per 6 carbon atoms, it may secure only a limited theoretical capacity, for example, about 372 mAh/g, and thus, it has limitations to requirements for high output and high capacity.

A study of a new negative electrode material for overcoming the limitations of graphite continues, and in particular, interest in a silicon-based negative electrode material is growing. Silicon has abundant reserves worldwide, has a high theoretical capacity of about 4,200 mAh/g as compared with graphite, has low reaction potential with lithium, and is an environmentally friendly material.

However, since the silicon-based negative electrode material is used by mechanically crushing silicon in a bulk form, it has an irregular shape, and the irregular shape irregularly causes volume expansion and shrinkage occurring during a charge/discharge process of silicon, which causes reduction in battery performance, and a non-uniform electrode is manufactured in the manufacture of an electrode to cause reduction in battery performance.

### [Disclosure]

### [Technical Problem]

The present disclosure attempts to provide a graphite-based negative electrode material capable of preventing reduction in battery performance, by providing a carbon-based negative electrode material to suppress volume expansion and shrinkage occurring during a battery charging and discharging process and suppress non-uniformity during electrode manufacture.

The present disclosure also attempts to provide a method of manufacturing a graphite-based negative electrode material having the above merits.

### [Technical Solution]

An exemplary embodiment of the present disclosure provides a graphite-based negative electrode material including: a graphite oxide obtained by oxidizing a surface of first graphite, and a graphite coating including second graphite and low crystalline carbon positioned on a surface of the second graphite, wherein the graphite coating to the graphite oxide is 1/9 to 1/3. In an exemplary embodiment, the graphite-based negative electrode material may have a D50 in a range of 17.5 µm to 19.5 µm.

In an exemplary embodiment, the graphite-based negative electrode material may have a tap density in a range of 0.80 g/cm³ to 0.86 g/cm³. In an exemplary embodiment, the graphite-based negative electrode material may have a specific surface area in a range of 4.57 m²/g to 5.50 m²/g range. In an exemplary embodiment, the graphite-based negative electrode material may have an oil absorption in a range of 51 ml/100 g to 56 ml/100 g.

Another exemplary embodiment of the present disclosure provides a negative electrode for a lithium secondary battery including: 96 to 99 wt% of the graphite-based negative electrode material described above, 0.5 to 1.5 wt% of a thickening agent, and a remaining amount of a binder. In an exemplary embodiment, the negative electrode for a lithium secondary battery may have an electrode density of 1.2 g/m³ to 1.8 g/m³.

Another exemplary embodiment of the present disclosure provides a lithium secondary battery including: the negative electrode for a lithium secondary battery described above, a positive electrode including a positive electrode active material, and an electrolyte, wherein in the electrolyte, ethylene methyl carbonate (EMC) to ethylene carbonate(EC) is 7/3 to 6/4.

Still another exemplary embodiment of the present disclosure provides a method of manufacturing a graphite-based negative electrode material including: oxidizing a surface of first graphite to manufacture a graphite oxide, mixing second graphite and low crystalline carbon to manufacture a graphite coating, and mixing the graphite coating and the graphite oxide at 1/9 to 1/3 of the graphite coating to the graphite oxide. In an exemplary embodiment, the manufacturing of a graphite oxide may include heating the first graphite in a range of 550°C to 650°C.

In an exemplary embodiment, the manufacturing of a graphite coating may include mixing the low crystalline carbon and the second graphite at 3/100 to 4/100 of the low crystalline carbon to the second graphite to manufacture a uniform mixture. In another exemplary embodiment, firing the uniform mixture at a temperature of 1,100°C or higher may be included. In an exemplary embodiment, in the method of manufacturing a graphite-based negative electrode material, the graphite-based negative electrode material may have an oil absorption in a range of 51 ml/100 g to 56 ml/100 g range.

### [Advantageous Effects]

According to an exemplary embodiment, a carbon-based negative electrode material having a small specific surface area and a high tap density is provided by including a graphite oxide obtained by oxidizing a surface of first graphite, and a graphite coating including second graphite and low crystalline carbon positioned on a surface of the second graphite, and making the graphite coating to the graphite oxide corresponding to 1/9 to 1/3, and thus, volume expansion and shrinkage occurring during a battery charge/discharge process may be suppressed, and non-uniformity during electrode manufacture may be suppressed, thereby preventing reduction in battery performance.

### [Description of the Drawings]

FIGS. 1A and 1B are texture photographs of a graphite-based oxide and a graphite-based coating, respectively, as a configuration of a graphite-based negative electrode material according to an exemplary embodiment of the present disclosure.
FIG. 2 is a flowchart of a method of manufacturing a graphite-based negative electrode material according to an exemplary embodiment of the present disclosure.

### [Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, exemplary embodiments of the present disclosure will be described in detail. However, these are suggested only as an example and the present disclosure is not limited thereby, and the present disclosure is only defined by the scope of the claims described later.

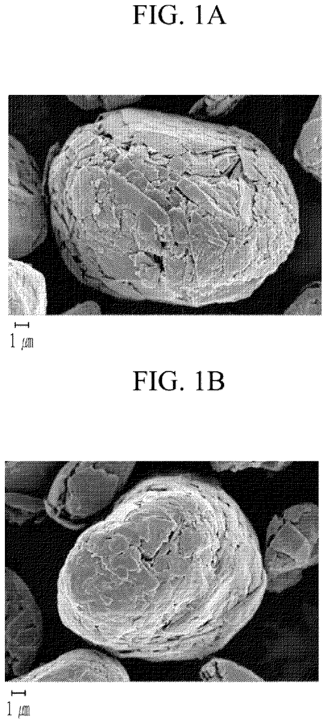

FIGS. 1A and 1B are texture photographs of a graphite-based oxide and a graphite-based coating, respectively, as a configuration of a graphite-based negative electrode material according to an exemplary embodiment of the present disclosure.

Referring to FIGS. 1A and 1B, FIG. 1A is a scanning electron microscope (SEM) photograph showing a state of graphite oxide particles, and FIG. 1B is an SEM photograph of graphite coating particles. A graphite-based negative electrode material may include a graphite oxide and a graphite coating. The graphite oxide may be obtained by oxidizing a surface of first graphite, and the graphite coating may include a graphite coating in which second graphite and low crystalline carbon are mixed.

In an exemplary embodiment, the first graphite and the second graphite may be natural graphite, as a non-limiting example. The natural graphite may be, for example, spherical natural graphite. Since the natural graphite is plate-shaped and has high orientation, it may be difficult to apply the natural graphite to a battery, like decreased output in an electrode plate, and thus, the first graphite and the second graphite of the present disclosure may be spherical graphite having a spherical shape.

In an exemplary embodiment, the graphite oxide may be obtained by oxidizing graphite. The first graphite is oxidized under an oxidation atmosphere, whereby a carbon element (C) on the surface of the first graphite reacts with an oxygen element (O₂) to manufacture and discharge carbon dioxide (CO₂).

In an exemplary embodiment, the graphite oxide may have an average particle diameter (D50) of 12 µm to 20 µm, specifically 15 µm to 18 µm. The D50 may be defined as a cumulative central diameter or a median diameter, and is a part of a volume cumulative particle size distribution. The volume cumulative particle size distribution is obtained by assuming one powder set and calculating the particle size distribution, and when the total volume of the powder set is 100% and the cumulative curve is calculated in the particle size distribution, particle diameters at the points where the cumulative curve reaches 10%, 50%, and 0% are indicated as 10% diameter, 50%diameter, 90% diameter (µm).

In an exemplary embodiment, when the graphite oxide is within the range, a stable negative electrode material may be manufactured in the electrode manufacture, a high-density electrode may be manufactured using the negative electrode material, and lifespan and battery stability may be improved. However, it is a non-limiting example, and it is clear that it may be properly classified as required.

In an exemplary embodiment, the graphite coating may include second graphite and low crystalline carbon positioned on a surface of the second graphite. The second graphite may be, for example, spherical natural graphite, and the low crystalline carbon material may be petroleum-based pitch, coal-based pitch, mesophase pitch carbides, low-molecular heavy oil, polyvinyl alcohol (PVA), polyvinyl chloride (PVC), sucrose, fired coke, or a combination thereof, and may be specifically softening point 250 pitch.

In an exemplary embodiment, the graphite coating may include the low crystalline carbon and the second graphite at 3/100 to 4/100 of the low crystalline carbon to the second graphite. Specifically, the second graphite and the low crystalline carbon material may be mixed at a weight ratio of 100:3 to 100:4, specifically at a weight ratio of 94:6 to 98:2, more specifically at a weight ratio of 95:5 to 97 3. The low crystalline carbon material is mixed within the range of the weight ratio, thereby forming a coating layer which is uniformly coated on the surface of spherical graphite.

In an exemplary embodiment, the graphite coating may have an average particle diameter (D50) of 17.5 to 19.5 µm, specifically 18 µm to 19 µm. When D50 is within the range, a stable negative electrode material may be manufactured in the electrode manufacture, a high-density electrode may be manufactured using the negative electrode material, and lifespan and battery stability may be improved. However, it is a non-limiting example, and it is clear that it may be properly classified as required.

In an exemplary embodiment, the graphite coating to the graphite oxide may be 1/9 to 1/3. Specifically, the graphite oxide and the graphite coating may be at a weight ratio of 90:10 to 75:25. The graphite negative electrode material mixed in the weight ratio range may be used to manufacture a secondary battery having excellent initial capacity, efficiency, and life characteristics. More specifically, the graphite oxide and the graphite coating may be 85:15 to 80:20. In the weight ratio range, a content ratio of a high tap density, a low specific surface area, and excellent cycle characteristics may be possessed.

As a ratio of the graphite coating increases, the specific surface area may be decreased, the tap density may be increased, the electrical conductivity of the lithium secondary battery may be decreased, electrolyte solution impregnability may be decreased, and cycle characteristics may be decreased. As a ratio of the graphite oxide increases, the specific surface area may be increased, the tap density may be decreased, the electrical conductivity of the lithium secondary battery may be increased, electrolyte solution impregnability may be increased, and cycle characteristics may be increased.

The ratio of the graphite oxide is excessively high, the tap density may be excessively decreased, which may cause packing density to be decreased, and there may be a limitation in electrode rolling. Therefore, when the graphite coating and the graphite oxide of the graphite negative electrode material are mixed in a range of 1/9 to 1/3, specifically 3/17 to 1/4 of the graphite coating to the graphite oxide, a graphite-based negative electrode material having a high tap density, a low specific surface area, and excellent cycle characteristics may be provided.

In an exemplary embodiment, the graphite-based negative electrode material may have a D50 in a range of 18.5 µm to 20.5 µm. The graphite-based negative electrode material may have a D50 in a range of, specifically, 18.5 µm to 19 µm.

In an exemplary embodiment, the graphite-based negative electrode material may have a tap density in a range of 0.80 g/cm³ to 0.90 g/cm³. Specifically, the graphite-based negative electrode material may have the tap density of 0.82 g/cm³ to 0.86 g/cm³. When the tap density of the graphite-based negative electrode material is out of the lower limit range, a ratio of the oxide is increased, the viscosity is excessively increased during slurry manufacture due to pores formed on the outer surface of the oxide, and eventually, the absolute numerical value of the active material disposed on a current collector is decreased to lower packing density. When the tap density of the graphite-based negative electrode material is out of the upper limit range, particle sizes vary and particle voids are relatively small, and thus, penetration of an electrolyte solution is hindered, ion conductivity is lowered, and processability during the electrode manufacture and the cycle characteristics of a lithium secondary battery are impaired.

In an exemplary embodiment, the graphite-based negative electrode material may have a specific surface area in a range of 4.57 m²/g to 5.50 m²/g. Specifically, the graphite-based negative electrode material may have a specific surface area of 4.60 m²/g to 5.10 m²/g. The specific surface area of the graphite-based negative electrode material may be decreased as the ratio of the graphite coating is increased, and since the graphite coating is composed of about 3% of amorphous carbon, its irreversible capacity is higher than that of the graphite oxide.

When the specific surface area is out of the lower limit range, an increased irreversible capacity may be caused. When the specific surface area is out of the upper limit range, channels are not sufficiently produced on the surface of the graphite-based negative electrode material due to the lack of oxidation of an oxidized product, so that the oil absorption is lowered and the impregnability of an electrolyte solution is decreased.

In an exemplary embodiment, the graphite-based negative electrode material may have an oil absorption in a range of 51 ml/100 g or more. Specifically, the graphite-based negative electrode material may have the oil absorption in a range of 51.0 ml/100 g to 56.0 ml/100 g. More specifically, the graphite-based negative electrode material may have an oil absorption in a range of 51.5 ml/100 g to 55.0 ml/100 g. The oil absorption may be, for example, an oil absorption of linseed oil. When the oil absorption of the graphite-based negative electrode material is out of the upper limit value, viscosity is increased to deteriorate slurry characteristics. When the oil absorption of the graphite-based negative electrode material is out of the lower limit range, the impregnability of an electrolyte solution and lithium ion conductivity are decreased, so that the capacity and the cycle characteristics of a lithium secondary battery are decreased.

When the oil absorption of the graphite-based negative electrode material satisfies a range of 51 ml/100 g or more, the impregnability and the lithium ion conductivity of an electrolyte solution are increased to improve cycle characteristics. When the oil absorption of the graphite-based negative electrode material is out of the upper limit range, the surface of the graphite-based oxide of the graphite-based negative electrode material becomes rough and has increased pores, and when the graphite-based negative electrode material is used to manufacture an electrode, aggregation occurs.

In an exemplary embodiment, the graphite-based negative electrode material may have a viscosity in a range of 11,750 to 13,500 cP. Specifically, the viscosity may be in a range of 12,000 to 13,000 cP. When the viscosity is out of the upper limit range, a slurry becomes thick, aggregation occurs when using it in the manufacture of an electrode, and slurry and electrode characteristics are deteriorated. When the viscosity is out of the lower limit value, electrical conductivity is deteriorated in the manufacture of an electrode.

In an exemplary embodiment, the graphite-based negative electrode material may have an electrical conductivity of 276.0 S/Cm or more. Specifically, the electrical conductivity may be 280.0 S/Cm or more. The electrical conductivity is measured based on 700 kgf/cm². As the electrical conductivity is increased, ion conductivity is shown to be high, and this is because an electron flow is needed for ion conduction.

In an exemplary embodiment, a negative electrode for a lithium secondary battery including the graphite-based negative electrode material may be provided. The negative electrode for a lithium secondary battery may include the graphite-based negative electrode material, a thickening agent, and a binder. The graphite-based negative electrode material may refer to the graphite-based negative electrode material described above, in a non-contradictory range.

The thickening agent is an additive for increasing the viscosity of a negative electrode material, and for example, may include at least one of carboxylmethyl cellulose (CMC), guar gum, uncrosslinked polyacrylic acid, uncrosslinked type polyacrylic acid, and polyvinyl alcohol.

The binder may adhere particles forming the negative electrode material to each other well and facilitate adhesion of the negative electrode material to a current collector, and for example, may include at least one of polyvinylidene fluoride, an ethylene-propylene-diene terpolymer, styrene butadiene rubber (SBR), acrylonitrile-butadiene rubber, fluororubber, polyvinyl acetate, polymethylmethacrylate, polyethylene, and cellulose nitrate.

In an exemplary embodiment, the negative electrode for a lithium secondary battery may include 96 to 99 wt% of the graphite-based negative electrode material, 0.5 to 1.5 wt% of the thickening agent, and a remaining amount of the binder. In an exemplary embodiment, the negative electrode for a lithium secondary battery may have an electrode density of 1.2 g/m³ to 1.8 g/m³. In the electrode density range, the initial capacity, the efficiency, and the life characteristics of the lithium secondary battery may be improved in the future manufacture of the electrode.

In an exemplary embodiment, a lithium secondary battery including the graphite-based negative electrode material may be provided. In an exemplary embodiment, the lithium secondary battery may include a negative electrode including the graphite-based negative electrode material, a positive electrode including a positive electrode active material, and an electrolyte. The graphite-based negative electrode material and the negative electrode are as described above, and the positive electrode may refer to a positive electrode used in a common lithium secondary battery. In an exemplary embodiment, the electrolyte may have ethylene methyl carbonate (EMC) to ethylene carbonate(EC) of 7/3 to 6/4. Specifically, the electrolyte may include the ethylene carbonate and the ethylene methyl carbonate at a weight ratio of 30:70 to 40:60. The lithium secondary battery may have the physical properties of an initial capacity of 360 mAh/g or more, specifically 363 mAh/g or more, an efficiency of 93.0% or more, specifically 94.0% or more, and a life characteristic of 88% or more, specifically 91% or more, by including the graphite-based negative electrode material.

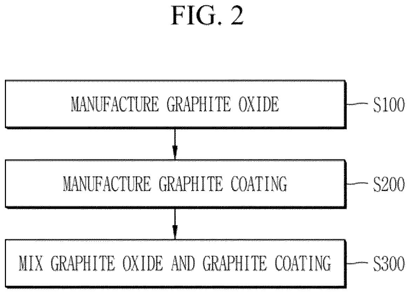

FIG. 2 is a flowchart of a method of manufacturing a graphite-based negative electrode material according to an exemplary embodiment of the present disclosure.

Referring to FIG. 2, the method of manufacturing a graphite-based negative electrode material according to an exemplary embodiment of the present disclosure may include: oxidizing a surface of first graphite to manufacture a graphite oxide (S100), mixing second graphite and low crystalline carbon to manufacture a graphite coating (S200), and mixing the graphite coating and the graphite oxide at 1/9 to 1/3 of the graphite coating to the graphite oxide (S300). For the detailed descriptions of the first graphite, the second graphite, the graphite oxide, the low crystalline carbon, and the graphite coating, FIG. 1 may be referred.

The oxidizing of a surface of first graphite to manufacture a graphite oxide (S100) may be performed under gas or solid phase oxidization conditions including a material to oxidize the first graphite. Under the oxidation conditions, the graphite oxide may oxidize the first graphite, for example, spherical graphite to remove all or a part of crystal structure defective parts in the spherical graphite. A gas phase or solid phase may include, for example, oxygen. Accordingly, a carbon element (C) in the spherical graphite, for example, on a surface part reacts with an oxygen element (O₂) to produce and discharge carbon dioxide (CO₂).

In an exemplary embodiment, the manufacturing of a graphite oxide may include heating first graphite in a range of 550°C to 700°C. The graphite oxide may be manufactured by a heat treatment under an atmosphere of 500°C to 700°C, specifically 550°C to 650°C. Accordingly, a side reaction-induced organic matter may be removed from the surface of the graphite oxide, and voids produced by removing the side reaction-induced organic matter, for example, channels are increased to facilitate movement of lithium ions.

In the mixing of second graphite and low crystalline carbon to manufacture a graphite coating (S200), the second graphite and the low crystalline carbon may be mixed and stirred. In the manufacturing of a graphite coating, the low crystalline carbon and the second graphite may be mixed at 3/97 to 2/98 of the low crystalline carbon to the second graphite. Specifically, mixing the second graphite and the low crystalline carbon at a weight ratio of 97:3 to 98:2 to manufacture a uniform mixture may be included.

In an exemplary embodiment, the mixing and the stirring may be performed by a mechanical mixing treatment. The mechanical mixing treatment may be performed by selecting any one method of ball milling, mechanofusion milling, shaker milling, planetary milling, attritor milling, disk milling, shape milling, nauta milling, nobilta milling, or a combination thereof, after spherizing the second graphite.

In an exemplary embodiment, the mechanical mixing treatment may be performed at a rotation speed of 300 to 2000 rpm. In another exemplary embodiment, the mechanical mixing treatment may be performed by a two-stage treatment. The two-stage treatment may be performed by, specifically, performing one-stage rotation at a rotation speed of 300 to 1000 rpm, and then performing two-stage rotation at a rotation speed of 1000 rpm to 2000 rpm. By performing the two-stage treatment, the second graphite and the low crystalline carbon may be uniformly mixed and stirred.

In an exemplary embodiment, the manufacturing of a uniform mixture may further include firing the uniform mixture at a temperature of 1,100°C or higher. In an exemplary embodiment, the firing may be performed under a gas atmosphere. The gas atmosphere may be performed under nitrogen (N₂), argon (Ar), helium (He), hydrogen (H₂), or a mixed gas atmosphere thereof. By the firing, a graphite coating in which the low crystalline carbon is uniformly applied on the surface of the second graphite may be manufactured. In an exemplary embodiment, the manufacturing of a uniform mixture may further include classifying the uniform mixture with a 45 µm sieve.

The mixing the graphite coating and the graphite oxide at 1/9 to 1/3 of the graphite coating to the graphite oxide (S300) may be mixing the graphite oxide and the graphite coating at a weight ratio of 95:5 to 75:25. By mixing in the range, a graphite-based negative electrode material having a low tap density and a large specific surface area may be manufactured. Accordingly, a lithium secondary battery having an excellent initial capacity, a high efficiency, and excellent life characteristics may be manufactured by including the graphite-based negative electrode material.

FIGS. 1 and 2 show the examples and the comparative examples of the present disclosure. The examples and the comparative examples described below are only an example of the present disclosure, and the present disclosure is not limited to the following examples.

In order to measure the tap density of the examples and the comparative examples described below, 15 g of powder was filled into a 50 ml cylinder, tapping and rotation were simultaneously performed 3,000 times, and the measurement was performed using a tap density meter (Autotap available from Quantachrome) and the like. In order to measure oil absorption, 30 g of powder was added to a mixing unit of an oil absorption meter (S-500 available from ASAHI SOUKEN), and linseed oil was supplied and rotated simultaneously to measure an oil absorption when converting a sample weight to 100 g.

### <Example 1>

### 1. Method of manufacturing graphite oxide

Spherical natural graphite having an average particle diameter of 18 µm was oxidized under an air atmosphere at 600°C for 3 hours in a continuous rotary kiln. As a result of measuring the physical properties of the oxidized natural graphite, the average particle diameter was 18.5 µm, the tap density was 0.78 g/cm³, the specific surface area was 5.4 m²/g, the oil absorption of linseed oil was 58.3 ml/100 g. The natural graphite oxide was classified in a 45 µm sieve.

### 2. Method of manufacturing graphite coating

Spherical shape natural graphite having an average particle diameter of 17.5 µm and pitch were mixed at a weight ratio of 96:4, and mechanically mixed at 1,500 rpm for 10 minutes in a high-speed stirrer to prepare a uniform mixture. The uniform mixture was fired at 1,200°C for 12 hours under a nitrogen atmosphere to manufacture a natural graphite-low crystalline carbon composite. As a result of measuring the physical properties of the oxidized natural graphite, the average diameter was 17.9 µm, the tap density was 1.09 g/cm³, the specific surface area was 2.7 m²/g, and the oil absorption of linseed oil was 42.7 ml/100 g.

### 3. Method of manufacturing graphite-based negative electrode material

It was manufactured by mixing the natural graphite oxide and the natural graphite coating at a weight ratio of 90:10.

### 4. Method of manufacturing negative electrode

A composite for the negative electrode material, carboxylmethyl cellulose (CMC) as a thickening agent, and a styrene butadiene rubber (SBR) as a binder were mixed at a mass ratio of 98:1:1, and then the mixture was dispersed in distilled water with ions removed to manufacture a composition for a negative electrode active material layer. It was applied on a copper foil, dried, and rolled to manufacture a negative electrode so that the electrode density was 1.4 g/m³.

### 5. Method of manufacturing lithium secondary battery

The negative electrode and lithium metal as a counter electrode were used, and a polypropylene separator between the negative electrode and the counter electrode was added to a battery container, and an electrolyte solution was injected to manufacture a lithium secondary battery. At this time, 1 M LiPF₆ dissolved in a mixed solution in which a mixing ratio of ethylene carbonate (EC) and ethylene methyl carbonate (EMC) was 3:7 and 0.5 wt% of vinylidene carbonate (VC) was included was used as the electrolyte solution.

### <Example 2>

The process was performed in the same manner as in Example 1, except that 85 wt% of the graphite oxide was used and 15 wt% of the graphite coating was mixed and used.

### <Example 3>

The process was performed in the same manner as in Example 1, except that 80 wt% of the graphite oxide was used and 20 wt% of the graphite coating was mixed and used.

### <Example 4>

The process was performed in the same manner as in Example 1, except that 75 wt% of the graphite oxide was used and 25 wt% of the graphite coating was mixed and used.

### <Comparative Examples 1 to 5>

The processes were performed in the same manner as in Example 1, except that 70 wt% of the graphite oxide and 30 wt% of the graphite coating were used in Comparative Example 1, 65 wt% of the graphite oxide and 35 wt% of the graphite coating were used in Comparative Example 2, 60 wt% of the graphite oxide and 40 wt% of the graphite coating were used in Comparative Example 3, 55 wt% of the graphite oxide and 45 wt% of the graphite coating were used in Comparative Example 4, and 50 wt% of the graphite oxide and 50 wt% of the graphite coating were mixed and used in Comparative Example 5.

### <Comparative Examples 6 to 8>

The processes were performed in the same manner as in Example 1, except that only 100% of raw materials were used in Comparative Example 6, only 100% of the graphite oxide was used in Comparative Example 7, and only 100% of the graphite coating was used in Comparative Example 8.

The physical properties of Examples 1 to 4 and Comparative Examples 1 to 8 may be confirmed in the following Table 1.

**(Table 1)**

| Classification | Mixing (graphite oxide: graphite coating) | D50 [µm] | Tap density [g/cm³] | Specific surface area [m²/g] | Oil absorption [ml/100 g] | Initial capacity [mAh] | Efficiency [%] | Cycle characteristic [%] | Viscosity [cP] | Electrical conductivity [S/Cm ] |
|---|---|---|---|---|---|---|---|---|---|---|
| Exampl e 1 | 90:10 | 18.7 | 0.81 | 5.10 | 55.8 | 364 | 94.6 | 92.6 | 1310 0 | 313.0 |
| Exampl e 2 | 85:15 | 18.6 | 0.83 | 4.96 | 53.9 | 363 | 94.5 | 92.3 | 1250 0 | 303.7 |
| Exampl e 3 | 80:20 | 18.6 | 0.84 | 4.82 | 52.2 | 363 | 94.5 | 92.0 | 1220 0 | 294.2 |
| Exampl e 4 | 75:25 | 18.5 | 0.86 | 4.69 | 51.7 | 363 | 94.3 | 91.6 | 1200 0 | 284.8 |
| Compar ative Exampl e 1 | 70:30 | 18.5 | 0.87 | 4.56 | 50.9 | 363 | 94.3 | 91.3 | 1170 0 | 275.3 |
| Compar ative Exampl e 2 | 65:35 | 18.5 | 0.89 | 4.43 | 50.2 | 363 | 94.2 | 91.0 | 1150 0 | 265.9 |
| Compar ative Exampl e 3 | 60:40 | 18.4 | 0.90 | 4.30 | 49.8 | 362 | 94.1 | 90.7 | 1110 0 | 256.4 |
| Compar ative Exampl e 4 | 55:45 | 18.4 | 0.92 | 4.17 | 49.1 | 362 | 94.1 | 90.4 | 1080 0 | 247.0 |
| Compar ative Exampl e 5 | 50:50 | 18.4 | 0.94 | 4.04 | 48.5 | 362 | 93.9 | 90.1 | 1040 0 | 237.5 |
| Compar ative Exampl e 6 | - | 18.0 | 0.91 | 5.33 | 50.6 | 362 | 93.2 | 93.1 | 5100 | 157.0 |
| Compar ative Exampl e 7 | 100:0 | 18.7 | 0.78 | 5.35 | 58.3 | 364 | 94.1 | 93.2 | 1360 0 | 332.0 |
| Compar ative Example 8 | 0:100 | 17.9 | 1.09 | 2.72 | 42.7 | 360 | 93.5 | 97.1 | 7500 | 143.0 |

As confirmed in Table 1, the graphite coating to the graphite oxide was 1/9 to 1/3, specifically, in a weight ratio range of the graphite oxide and the graphite coating of 90:10 to 75:25, tap density was low, a specific surface area was large, viscosity was high, and electrical conductivity was high. Specifically, it is confirmed that the graphite-based negative electrode materials according to Examples 1 to 4 and Comparative Examples 1 to 5 had a decreased tap density value with an increased ratio of the mixed graphite oxide, and an improved tap density value with an increased ratio of the graphite coating. In addition, it is confirmed that the graphite-based negative electrode materials according to Examples 1 to 4 and Comparative Examples 1 to 5 had an improved oil absorption value with an increased ratio of the mixed graphite oxide, and an improved oil absorption value with a decreased ratio of the graphite coating.

It is confirmed that in the graphite-based negative electrode materials according to Comparative Examples 6 and 7, oxidation on the surface of graphite increased the oil absorption, and in the graphite-based negative electrode materials according to Comparative Examples 7 and 8, the low crystalline carbon coating decreased oil absorption. Accordingly, it is confirmed that a secondary battery using the graphite-based negative electrode material in which the graphite coating and the graphite oxide were mixed as a negative electrode material had excellent initial capacity, efficiency, and life characteristics.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

## Claims

1. A graphite-based negative electrode material comprising:
a graphite oxide obtained by oxidizing a surface of first graphite; and
a graphite coating including second graphite and low crystalline carbon positioned on a surface of the second graphite,
wherein the graphite coating to the graphite oxide is 1/9 to 1/3.

2. The graphite-based negative electrode material of claim 1, wherein:
the graphite-based negative electrode material has a D50 in a range of 17.5 to 19.5 µm.

3. The graphite-based negative electrode material of claim 1, wherein:
the graphite-based negative electrode material has a tap density in a range of 0.80 g/cm³ to 0.86 g/cm³.

4. The graphite-based negative electrode material of claim 1, wherein:
the graphite-based negative electrode material has a specific surface area in a range of 4.57 m²/g to 5.50 m²/g.

5. The graphite-based negative electrode material of claim 1, wherein:
the graphite-based negative electrode material has an oil absorption in a range of 51 ml/100 g to 56 ml/100 g.

6. A negative electrode for a lithium secondary battery comprising 96 to 99 wt% of the graphite-based negative electrode material of any one of claims 1 to 5, 0.5 to 1.5 wt% of a thickening agent, and a remaining amount of a binder.

7. The negative electrode for a lithium secondary battery of claim 6, wherein:
the negative electrode has an electrode density of 1.2 g/m³ to 1.8 g/m³.

8. A lithium secondary battery comprising:
the negative electrode for a lithium secondary battery of claim 6 or 7;
a positive electrode including a positive electrode active material; and
an electrolyte,
wherein the electrolyte has ethylene methyl carbonate (EMC) to ethylene carbonate (EC) of 7/3 to 6/4.

9. A method of manufacturing a graphite-based negative electrode material, the method comprising:
oxidizing a surface of first graphite to manufacture a graphite oxide;
mixing second graphite and low crystalline carbon to manufacture a graphite coating; and
mixing the graphite oxide and the graphite coating at 1/9 to 1/3 of the graphite coating to the graphite oxide.

10. The method of manufacturing a graphite-based negative electrode material of claim 9, wherein:
the manufacturing of a graphite oxide includes heating the first graphite in a range of 550°C to 650°C.

11. The method of manufacturing a graphite-based negative electrode material of claim 9, wherein:
the manufacturing of a graphite coating includes mixing the low crystalline carbon and the second graphite at 3/100 to 4/100 of the low crystalline carbon to the second graphite to manufacture a uniform mixture.

12. The method of manufacturing a graphite-based negative electrode material of claim 11, wherein:
firing the uniform mixture at a temperature of 1,100°C or higher is included.

13. The method of manufacturing a graphite-based negative electrode material of claim 9, wherein:
the graphite-based negative electrode material has an oil absorption in a range of 51 ml/100 g to 56 ml/100 g.
